# EUROPEAN PATENT APPLICATION

(11) **EP 4 571 886 A1**
(43) Date of publication of application: **18.06.2025**
(21) Application number: 23851772.6
(22) Date of filing: 07.08.2023
(51) Int. Cl.: H01M 4/58, H01M 10/054, H01M 4/62

(54) **BATTERY MATERIAL AND PREPARATION METHOD THEREFOR, AND SECONDARY BATTERY**

(30) Priority: 10.08.2022 CN 202210957767
(71) Applicant: BYD Company Limited, Shenzhen, Guangdong 518118 (CN)
(72) Inventor: ZHANG, Yadong, Shenzhen, Guangdong 518118 (CN); YIN, Xiaoqiang, Shenzhen, Guangdong 518118 (CN); JIN, Lina, Shenzhen, Guangdong 518118 (CN); LI, Xiangyu, Shenzhen, Guangdong 518118 (CN)
(74) Representative: Mathys & Squire
(86) International application number: PCT/CN2023/111483
(87) International publication number: WO 2024/032551

(57) **Abstract**

A battery material and a preparation method therefor, and a secondary battery. The general molecular formula of the battery material comprises A₃V₂₋ₓEₓ(P_{1-y}M_{y}O₄)₃, wherein the element A represents an alkali metal element; the element E represents a doping element that substitutes V, and comprises at least one of transition metal elements, rare earth elements, Mg and Sr; the element M represents a doping element that substitutes P, and comprises at least one of S and Se; and 0 ≤ x ≤ 1, and 0 < y ≤ 1/3.

## Description

### CROSS-REFERENCE TO RELATED APPLICATION

This application claims priority to and benefits of Chinese Patent Application No. 202210957767.8, filed on August 10, 2022. The entire content of the above-referenced application is incorporated herein by reference.

### FIELD

The present disclosure relates to the field of battery technologies, and specifically to a battery material and a preparation method therefor, and a secondary battery.

### BACKGROUND

Natrium superionic conductor (NASICON) compounds are polyanionic materials with three-dimensional ion channels. NASICON compounds are often used as electrode materials or solid electrolytes because of their good cycle performance, safety performance, and flexible charging and discharging voltage plateaus. However, the polyanionic structure leads to poor electronic conductivity and low electrochemical activity of NASICON-type compounds. Moreover, alkali metal ions cannot be rapidly intercalated into or deintercalated from the three-dimensional crystal framework, affecting the rate performance of the material.

In the related art, the problems of the materials are generally solved by doping and modification. However, doping schemes currently common in the industry have limited effect in improving the electrochemical performance of the materials.

### SUMMARY

Therefore, the present disclosure provides a battery material. The phosphorus site of the battery material is doped with non-metallic elements with higher electronegativity than the element phosphorus, so that the electronic conductivity and rate performance of the material can be significantly improved.

A first aspect of the present disclosure provides a battery material, a general molecular formula of the battery material comprising A₃V₂₋ₓEₓ(P_{1-y}M_{y}O₄)₃, wherein the element A represents an alkali metal element; the element E represents a doping element that substitutes V, and the element E comprises at least one of a transition metal element, a rare earth element, Mg, and Sr; the element M represents a doping element that substitutes P, and the element M comprises at least one of S and Se; and 0 ≤ x ≤ 1, and 0 < y ≤ 1/3.

The element M is a non-metallic element with stronger electronegativity than the element P, and after the doping element M substitutes a part of the P atoms, the number of charges of O atoms originally connected to the P atoms can be reduced, thereby reducing the Coulomb effect between the O atoms and the A atoms. Therefore, the binding effect of the O atoms on the A atoms during the charging and discharging process can be reduced, which is beneficial to the deintercalation/intercalation of the A atoms, thereby improving the rate performance of the material. In addition, the doping by the element M at the phosphorus site can reduce the band gap value of the compound A₃V₂(P_{1-y}M_{y}O₄)₃ and improve the electronic conductivity of the material.

In some embodiments, the transition metal element comprises at least one of Fe, Cr, Mn, Co, Ti, Ni, Cu, Zn, Mo, Nb, and Zr; and the rare earth element comprises at least one of La and Ce.

In some embodiments, a value range of x is: 0.1 ≤ x ≤ 1.

In some embodiments, a value range of y is: 1/18 ≤ y ≤ 1/3.

In some embodiments, the element A comprises at least one of Na, K, and Li.

A second aspect of the present disclosure provides a preparation method for a battery material, comprising:
weighing an A source, a vanadium source, an E source, a phosphorus source, and an M source according to a general molecular formula A₃V₂₋ₓEₓ(P_{1-y}M_{y}O₄)₃ of a battery material to be prepared, and mixing the sources to obtain a precursor material, wherein the element A represents an alkali metal element; the element E represents a doping element that substitutes V, and the element E comprises at least one of a transition metal element, a rare earth element, Mg, and Sr; the element M represents a doping element that substitutes P, and the element M comprises at least one of S and Se; and 0 ≤ x ≤ 1, and 0 < y ≤ 1/3; and
calcining the precursor material to obtain the battery material.

The preparation method has the advantages of simple operation and high process controllability, and can realize large-scale industrial preparation.

In some embodiments, conditions of the calcining comprise: calcining the precursor material under an inert gas atmosphere at 400°C to 900°C for 10 h to 30 h.

In some embodiments, the inert gas is at least one of argon, nitrogen, or helium.

In some embodiments, the mixing comprises a solid phase mixing method or a sol-gel method.

In some embodiments, the transition metal element comprises at least one of Fe, Cr, Mn, Co, Ti, Ni, Cu, Zn, Mo, Nb, and Zr; and the rare earth element comprises at least one of La and Ce.

In some embodiments, the element A comprises at least one of Na, K, and Li.

In some embodiments, a value range of x is: 0.1 ≤ x ≤ 1.

In some embodiments, a value range of y is: 1/18 ≤ y ≤ 1/3.

A third aspect of the present disclosure provides a secondary battery, comprising the battery material according to the first aspect of the present disclosure.

The secondary battery has good rate performance.

### BRIEF DESCRIPTION OF THE DRAWINGS

FIG. 1 is an x-ray diffraction (XRD) pattern of battery materials of Examples 1 to 3 and Comparative Example 1.
FIG. 2 is a curve of specific capacity of batteries prepared from the battery materials of Examples 1 to 4 and Comparative Example 1 as a function of the number of cycles.

### DETAILED DESCRIPTION

NASICON compounds are polyanionic materials with three-dimensional ion channels proposed by Professor Goodenough, and can be used as both electrode materials and solid electrolyte materials. To explain the beneficial effects of the present disclosure more clearly, the crystal structure of NASICON compounds is briefly described below by using Na₃V₂(PO₄)₃ (NVP for short) as an example.

Each structural element of Na₃V₂(PO₄)₃ contains three PO₄ tetrahedrons and two VO₆ octahedrons, which are connected by common vertex oxygen atoms to form alkali metal ions (specifically sodium ions) that can accommodate two kinds of different oxygen environments. The sodium ions respectively occupy Na(1) and Na(2) positions. It is generally believed that only the sodium ions at the Na(2) position can be deintercalated or intercalated during charging and discharging, thus completing the lattice configuration transformation between depleted Na₃V₂(PO₄)₃ and fully-charged NaV₂(PO₄)₃. However, the high energy barrier of sodium ions during migration seriously affects the migration rate of sodium ions, resulting in poor ionic conductivity and poor rate performance of the material. In addition, the electronic conductivity of such materials is also poor.

To solve the above problems, an embodiment of the present disclosure provides a battery material with doping at the phosphorus site. A general molecular formula of the battery material comprises A₃V₂₋ₓEₓ(P_{1-y}M_{y}O₄)₃, wherein the element A represents an alkali metal element; the element E represents a doping element that substitutes V, and the element E comprises one or more of a transition metal element, a rare earth element, Mg, and Sr; the element M represents a doping element that substitutes P, and the element M comprises at least one of S and Se; and x represents the molar ratio of the element E substituting the element V, y represents the molar ratio of the element M substituting the element P, 0 ≤ x ≤ 1, and 0 < y ≤ 1/3.

The element M has stronger electronegativity than the element P. M atoms substitute a part of the P atoms to connect with O atoms, and M atom has stronger ability to attract electrons in the compound A₃V₂(P_{1-y}M_{y}O₄)₃, so that the number of charges of O atoms originally connected to P atoms can be reduced, thereby weakening the Coulomb effect between the O atoms and the A atoms. Therefore, the binding effect of the PO₄³⁻ anionic groups on the A atoms is reduced, and the migration barrier for ions is reduced, so that the deintercalation and intercalation of the A atoms can be accelerated, thereby improving the ionic conductivity of the material and the rate performance of the material. In addition, the doping element M can also cause more electrons to accumulate near the Fermi surface, thereby improving the electronic conductivity of the material, improving the electrochemical kinetics during charging and discharging of the material, and further improving the rate of performance of a secondary battery using the material. Controlling the doping amount of the element M within the above range can enable the material to have a high rate of performance and good electronic conductivity while ensuring good structural stability of the material.

When an appropriate amount of the element E is further used to dope at the V site of A₃V₂(P_{1-y}M_{y}O₄)₃, the electronic conductivity of the obtained double-doped material can be maintained at a high level.

In some embodiments of the present disclosure, the element A comprises, but is not limited to, one or more of Li, Na, or K. The element A may be selected depending on the specific type of the secondary battery. For example, when the battery material A₃V₂₋ₓEₓ(P_{1-y}M_{y}O₄)₃ is used in a sodium secondary battery, the element A is Na.

In some embodiments of the present disclosure, the element M is S. The use of the element S for doping at the phosphorus site (S atoms substitute the positions of a part of the P atoms in the crystal lattice) makes the preparation process more controllable, improves the product yield, and makes the performance of the prepared battery material more stable. In addition, the use of the element S for doping at the phosphorus site significantly improves the electronic conductivity of the material, reduces the powder resistivity of the obtained material, and achieves a high structural stability of the material during charging and discharging.

In some embodiments of the present disclosure, the element M is Se. The ionic radius (tetravalent) of the element Se is larger than that of the element P, and can appropriately expand the unit cell volume of the original compound A₃V₂(PO₄)₃, further weaken the binding effect of anionic groups on A ions, and further reduce the migration barrier for A ions, thereby improving the rate performance of the material.

In some embodiments of the present disclosure, where A₃V₂₋ₓEₓ(P_{1-y}M_{y}O₄)₃ (where x may be 0), a value range of y is: 1/18 ≤ y ≤ 1/6. Controlling the doping amount of the element M within the above range can sufficiently reduce the risk of damage to the unit cell structure of the original compound A₃V₂(PO₄)₃ caused by doping with the element M, thereby ensuring that A₃V₂₋ₓDₓ(P_{1-y}M_{y}O₄)₃ has good structural stability and can continuously maintain a stable structure during repeated charging and discharging.

In some embodiments of the present disclosure, where A₃V₂₋ₓEₓ(P_{1-y}M_{y}O₄)₃ (where x may be 0), a value range of y is: 1/6 ≤ y ≤ 1/3. Controlling the doping amount of the element M within the above range can improve the electronic conductivity of the active material reduce the migration barrier for Na ions (i.e., improve the ionic conductivity), and further improve the rate performance of the secondary battery.

In some embodiments of the present disclosure, y is 1/18. In this case, the material A₃V₂₋ₓEₓ(P_{1-y}M_{y}O₄)₃ (where x may be 0) material has very high crystallinity, and has an optimal structural stability. In some other embodiments, y is 1/6. In this case, the material A₃V₂₋ₓEₓ(P_{1-y}M_{y}O₄)₃ (where x may be 0) has good electronic conductivity and a low migration barrier for A ions. In some other embodiments, y is 1/3. In this case, the material A₃V₂₋ₓEₓ(P_{1-y}M_{y}O₄)₃ (where x may be 0) has a low migration barrier and high electronic conductivity.

In some embodiments of the present disclosure, the transition metal element comprises one or more of Fe, Cr, Mn, Co, Ti, Ni, Cu, Zn, Mo, Nb, and Zr.

In some embodiments of the present disclosure, the rare earth element comprises at least one of La and Ce.

In some embodiments of the present disclosure, the element E comprises one or more of Mg, Sr, Cr, Mn, Fe, Co, Ni, Cu, Zn, Ti, Mo, Nb, and Zr. The cost of these elements is lower than that of lanthanide elements La and Ce. The ionic radii of Cr, Mn, Fe, Co, Ni, Cu, and Zn are slightly smaller than that of V ions, and doping with such elements can reduce the unit cell volume of A₃V₂(PO₄)₃, thereby further improving the structural stability of the material. In some other embodiments of the present disclosure, to better balance the cost of the element E and the impact on the operating voltage of the material, the element E may be one or more of Ti, Cr, Mn, and Fe. These elements are also helpful to increase the operating voltage of doped materials. Fe has the lowest cost and improves the electronic conductivity more significantly, and Mn has a better effect in increasing the operating voltage of doped materials.

In some specific embodiments, the element E is Mn, and the element M is S. The yield of A₃V₂₋ₓMnₓ(P_{1-y}S_{y}O₄)₃ is high, and the prepared material has good electronic conductivity.

In some embodiments of the present disclosure, x is preferably in a range of 0.1 ≤ x ≤ 1. Controlling the doping amount of the element E within the above range can avoid the loss of the electrochemical activity of A₃V₂₋ₓEₓ(P_{1-y}M_{y}O₄)₃ caused by an excessive doping amount of E, and can ensure that the doping with the element E can sufficiently improve the electrochemical performance of the material.

Correspondingly, an embodiment of the present disclosure provides a preparation method for a battery material, comprising:
weighing an A source, a vanadium source, an E source, a phosphorus source, and an M source according to a general molecular formula A₃V₂₋ₓEₓ(P_{1-y}M_{y}O₄)₃ of a battery material to be prepared, and mixing the sources to obtain a precursor material, wherein the element A represents an alkali metal element; the element E represents a doping element that substitutes V, and comprises one or more of a transition metal element, a rare earth element, Mg, and Sr; the element M represents a doping element that substitutes P, and comprises at least one of S and Se; and 0 ≤ x ≤ 1, and 0 < y ≤ 1/3; and
calcining the precursor material to obtain the battery material.

According to the above preparation method, the battery material provided in the embodiment of the present disclosure can be obtained by mixing the raw materials according to a preset ratio to obtain a precursor material and then calcining the mixed raw materials. The preparation method has the advantages of simple operation and high process controllability, and can realize large-scale industrial preparation.

In some embodiments of the present disclosure, the A source, the vanadium source, the E source, the phosphorus source, and the M source are weighed according to a molar ratio of A:V:E:P:M=3:(2-x):x:(3-3y):3y, and mixed. In some embodiments, to make up for the loss of the alkali metal element A during the preparation process, the element A may be in excess of 10%.

In some embodiments of the present disclosure, the mixing comprises, but is not limited to, a solid phase mixing method or a sol-gel method.

Specifically, the solid phase mixing method may be: mixing the A source, the vanadium source, the E source, the phosphorus source, and the M source in proportion in a ball mill to obtain the precursor material.

Specifically, the sol-gel method may be: adding the A source, the vanadium source, the E source, the phosphorus source, and the M source into a solvent in proportion, heating and fully stirring the mixture to produce a gel, and continuing to heat and stir the gel to evaporate off the solvent to obtain the precursor material. The heating and stirring are performed at 30°C to 200°C with a stirring speed of 300 rpm to 900 rpm for 1 h to 6 h.

In the present disclosure, the solvent is a volatile solvent, and specifically may be one or more of water, ethanol, and acetone.

In some embodiments of the present disclosure, conditions of the calcining comprise calcining the precursor material under an inert gas atmosphere at 400°C to 900°C for 10 h to 30 h.

In the present disclosure, the inert gas is specifically at least one of argon, nitrogen, or helium.

In the present disclosure, the A source (where the element A is at least one of Li, Na, or K) may be at least one of a nitrate, an oxalate, an acetate, and an acetylacetonate of the element A. For example, when the element A is Na, the Na source may be at least one of sodium nitrate, sodium oxalate, sodium acetate, and sodium acetylacetonate.

In the present disclosure, the vanadium source comprises, but is not limited to, at least one of a vanadium source in which the vanadium element is trivalent, tetravalent, or pentavalent in the compound. For example, the vanadium source may be at least one of vanadium pentoxide, vanadium tetroxide, vanadium trioxide, ammonium metavanadate, sodium metavanadate, vanadium acetylacetonate, vanadyl acetylacetonate, etc.

In the present disclosure, the E source is a compound familiar to those skilled in the art. For example, the E source is at least one of an organometallic salt, a metallic acid salt, and a metal oxide of a specific element corresponding to the element E. For example, when the element E is Ti, the E source may be at least one of titanium oxide, tetrabutyl titanate, titanium tetraisopropoxide, titanium ethoxide, etc.

In the present disclosure, the phosphorus source may be at least one of phosphoric acid, sodium phosphate, sodium dihydrogen phosphate, disodium hydrogen phosphate, ammonium dihydrogen phosphate, diammonium hydrogen phosphate, ammonium phosphate, etc.

In the present disclosure, the M source may be at least one of an acid or a salt of a specific doping element corresponding to the element M. For example, when the element M is S, the M source may be sodium sulfate, ammonium sulfate, sulfuric acid, etc.

Correspondingly, an embodiment of the present disclosure provides an electrode. The electrode comprises the battery material described above.

The electrode can be used to provide a battery with high rate performance, good cycle performance, and good energy density.

In some embodiments of the present disclosure, the electrode is a positive electrode. The positive electrode generally comprises a positive electrode current collector and a positive electrode active material layer arranged on at least one surface of the positive electrode current collector. The positive electrode active material layer contains the battery material described above. In addition, the positive electrode active material layer may further contain a binder, and optionally a conductive agent. The binder and the conductive agent may be conventional choices in the battery field.

The positive electrode current collector may be various materials suitable for use as a current collector of a positive electrode, and comprises, but is not limited to, a metallic elemental foil, an alloy foil, a metal-plated polymer film, or any of the above materials coated with carbon on a surface thereof, etc. The metallic elemental foil may be an aluminum foil. The alloy foil may be an aluminum alloy foil. The metal plated on the surface of the polymer film may be an aluminum elemental layer or an aluminum alloy layer.

An embodiment of the present disclosure provides a secondary battery. The secondary battery comprises the electrode described above.

An embodiment of the present disclosure provides a secondary battery. The secondary battery comprises the battery material described above

Specifically, the secondary battery may be a lithium secondary battery, a sodium secondary battery, or a potassium secondary battery. Because the secondary battery comprises A₃V₂₋ₓEₓ(P_{1-y}M_{y}O₄)₃ described above, the secondary battery has high energy density, good rate performance, good cycle performance, etc. The secondary battery can be used in 3C electronic products (such as mobile phones, tablet computers, etc.), vehicles (such as automobiles, boats, etc.) or other electrical devices to improve the performance and market competitiveness of the electrical devices.

The secondary battery may be a liquid-state battery using a liquid electrolyte, or a semi-solid-state or solid-state battery using a semi-solid-state or solid-state electrolyte. In some embodiments, the secondary battery may comprise the positive electrode described above, a negative electrode, and a separator and an electrolyte solution between the positive electrode and the negative electrode. In some other embodiments, the secondary battery may comprise the positive electrode, a negative electrode, and a semi-solid or solid electrolyte between the positive electrode and the negative electrode. In particular, the battery material provided by the embodiments of the present disclosure may be used as the semi-solid or solid electrolyte. In addition, when the semi-solid or solid electrolyte is used, the positive electrode and the negative electrode may further comprise a semi-solid electrolyte material or a solid electrolyte material.

The technical solutions of the present disclosure will be further described in detail below through multiple examples.

### Example 1

A battery material was prepared according to the following operations.

Sodium nitrate as a sodium source, vanadium pentoxide as a vanadium source, phosphoric acid as a phosphorus source, and sodium sulfate as a S source were weighed according to a molar ratio of Na:V:P:S=3:2:2.84:0.17, and added to ethanol as a solvent. The mixture was heated and stirred at 80°C to evaporate off the solvent to obtain a precursor material.

The precursor material was calcined under a protective nitrogen atmosphere at 800°C for 12 h to obtain a battery material Na₃V₂(P_{17/18}S_{1/18}O₄)₃ (hereinafter briefly referred to as S1-NVP).

### Example 2

This example was the same as Example 1 except that the content of the S source was adjusted so that the molar ratio of Na:V:P:S was 3:2:2.5:0.5. The general molecular formula of the prepared battery material was Na₃V₂(P_{5/6}S_{1/6}O₄)₃ (hereinafter briefly referred to as S3-NVP).

### Example 3

This example was the same as Example 1 except that the content of the S source was adjusted so that the molar ratio of Na:V:P:S was 3:2:2:1. The general molecular formula of the prepared battery material was Na₃V₂(P_{2/3}S_{1/3}O₄)₃ (hereinafter briefly referred to as S6-NVP).

### Example 4

This example was the same as Example 1 except that the content of the S source was slightly adjusted so that the molar ratio of Na:V:P: S was 3:2:2.94:0.06. The general molecular formula of the prepared battery material was Na₃V₂(P_{0.98}S_{0.02}O₄)₃.

### Example 5

This example was the same as Example 1 except that the S source was replaced with a Se source which was sodium selenate, and the process parameters were slightly adjusted. The general molecular formula of the prepared battery material was Na₃V₂(P_{17/18}Se_{1/18}O₄)₃.

### Example 6

(1) Sodium nitrate as a sodium source, vanadium pentoxide as a vanadium source, manganese dioxide as a Mn source, phosphoric acid as a phosphorus source, and sodium sulfate as a S source were weighed according to a molar ratio of Na:V:Mn:P:S=3:1.5:0.5:2.84:0.17, and fed to a ball mill and fully mixed to obtain a precursor material.
(2) The precursor material was calcined under a protective nitrogen atmosphere at 800°C for 12 h to obtain a battery material Na₃V_{1.5}Mn_{0.5}(P_{17/18}S_{1/18}O₄)₃.

### Example 7

(1) The content of the Mn source was slightly adjusted, and the general molecular formula of the prepared battery material was Na₃V_{1.8}Mn_{0.2}(P_{17/18}S_{1/18}O₄)₃.

### Example 8

This example was the same as Example 5 except that the Mn source was replaced with a Fe source which was ferrous oxide, the process parameters were slightly adjusted, and the raw materials were fed into a ball mill and evenly mixed to obtain a precursor material, which was then calcined. The general molecular formula of the prepared battery material was Na₃V_{1.5}Fe_{0.5}(P_{17/18}S_{1/18}O₄)₃.

### Example 9

This example was the same as Example 5 except that the Mn source was replaced with a Ti source which was titanium oxide, and the preparation process was slightly adjusted. The general molecular formula of the prepared battery material was Na₃V_{1.5}Ti_{0.5}(P_{17/18}S_{1/18}O₄)₃.

### Example 10

This example was the same as Example 5 except that the Mn source was replaced with a Cr source which was chromium oxide, and the content of the Na source and the subsequent preparation process were slightly adjusted. The general molecular formula of the prepared battery material was Na₃V_{1.5}Cr_{0.5}(P_{17/18}S_{1/18}O₄)₃.

### Example 11

This example was the same as Example 5 except that the S source was replaced with a Se source which was selenium dioxide, and the subsequent process parameters were slightly adjusted. The general molecular formula of the prepared battery material was Na₃V_{1.5}Mn_{0.5}(P_{17/18}Se_{1/18}O₄)₃.

### Example 12

This example was the same as Example 5 except that potassium nitrate was further added as a potassium source, and the content of the Na source and the subsequent process parameters were slightly adjusted. The general molecular formula of the prepared battery material was Na₂K₁V_{1.5}Mn_{0.5}(P_{17/18}S_{1/18}O₄)₃.

### Example 13

This example was the same as Example 1 except that the Na source was replaced with a lithium source which was lithium nitrate, and the preparation process was slightly adjusted. The general molecular formula of the prepared battery material was Li₃V₂(P_{17/18}S_{1/18}O₄)₃.

### Comparative Example 1

A battery material was prepared. The general molecular formula of the battery material was Na₃V₂(PO₄)₃.

### Comparative Example 2

A battery material was prepared. The general molecular formula of the battery material was Na₃V_{1.5}Fe_{0.5}(PO₄)₃.

### Performance Test

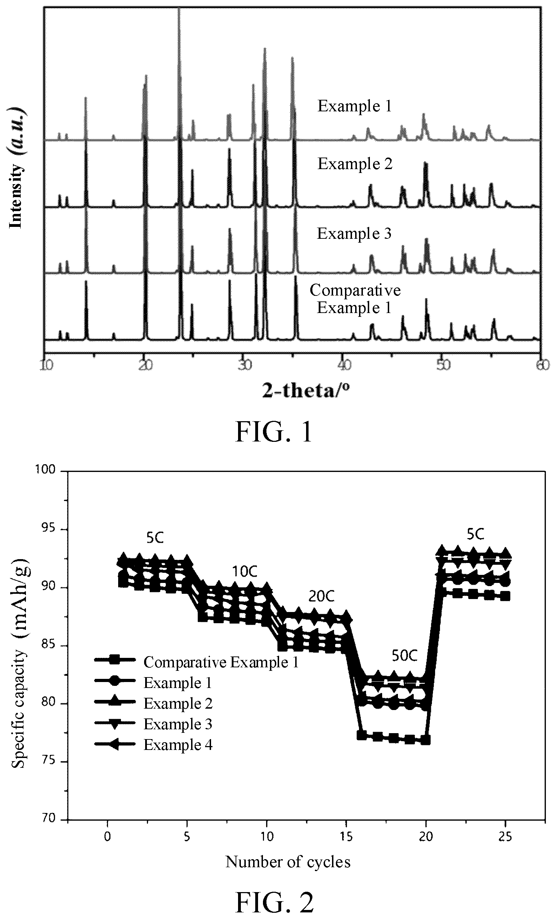

(1) Characterization of the crystal structure of the material: The battery materials of Examples 1-3 and Comparative Example 1 are characterized by XRD. The results are as shown in FIG. 1.
(2) Electronic conductivity test: The powder to be tested was placed in a powder resistivity tester. A pressure of 50 MPa was applied and held for 10s. The powder resistivity was measured by a 4-probe method, and could be converted into electronic conductivity (where electronic conductivity is the reciprocal of resistivity). The results are as shown in Table 1 below.
(3) Preparation of battery

① Preparation of positive electrode: The battery material of each example or comparative example, a conductive agent which was acetylene black, and a binder which was polyvinylidene fluoride (PVDF) were added to a solvent which was NMP (N-methylpyrrolidone) at a mass ratio of 88:6:6, and evenly stirred to obtain a positive electrode slurry. The positive electrode slurry was coated on an aluminum foil serving as a positive electrode current collector, dried, rolled, and cut to obtain a positive electrode. ② Preparation of negative electrode: A negative electrode active material (which was specifically graphite) and a binder (which was specifically a mixture of styrene-butadiene rubber (SBR) and sodium carboxymethyl cellulose (CMC-Na) at a mass ratio of 2:3) were mixed in ionized water at a mass ratio of 95:5, and evenly stirred to obtain a negative electrode slurry. The negative electrode slurry was coated on a copper foil serving as a negative electrode current collector, dried, rolled, and cut to obtain a negative electrode. ③ Battery assembly: The positive electrode, a separator, and the negative electrode are alternately laminated to obtain a battery core. The battery core was wound and placed in an outer packaging foil which was an aluminum plastic film, and an electrolyte solution was injected, followed by vacuum packaging, standing, formation, shaping, and other processes, to complete the preparation of a sodium battery. Secondary sodium batteries prepared from the battery materials of the examples and comparative examples were denoted as S1-S13 and DS1-DS2, respectively.

The batteries S1-S13 and DS 1-DS2 were tested for electrochemical performance.
a) Cycle performance test: A charge-discharge cycle test was performed for each battery at 25°C and at a current of 0.5C, and the voltage range was 2.5 V to 4.3 V. During charging, the battery was first charged at a constant current of 0.5C to a cut-off voltage of 4.3 V, and then charged at a constant voltage to a cut-off current of 0.05 C. During discharging, the battery was discharged to 2.5 V at a constant current of 0.5C. The first cycle specific discharge capacity and the capacity retention rate after 50 cycles of each cell were recorded. The first cycle specific discharge capacity is equal to the ratio of the first cycle discharge capacity of each button cell to the mass of the positive electrode active material in the cell. The capacity retention rate after 50 cycles is equal to the ratio of the discharge capacity after 50 cycles to the first cycle discharge capacity.
b) Rate performance test: The change of discharge gram capacity of each battery with the number of cycles at different rates such as 5C, 10C, 20C, and 50C was tested at 25°C, and the voltage range was 2.5 V to 4.3 V. The rate performance curves of some examples and comparative examples are as shown in FIG. 2. For the calculation of the gram capacity, the ratio of the discharge capacity at a current density to the mass of the positive electrode active material is used as the discharge gram capacity at the current density. Table 1 shows the first cycle specific discharge capacity at 50C, and the ratio of the first cycle discharge capacity at 50C to the first cycle discharge capacity at 5C of each battery. The test results of the batteries were as shown in Table 1 below.

**Table 1 Summary of electrochemical performance of examples and comparative examples**

| Test No. | General molecular formula of material | Electronic conductivity µS/cm | Capacity retention rate after 50 cycles (%) | First cycle specific discharge capacity at 50C (mAh/g) | Ratio of first cycle charge/discharge capacity at 50C to first cycle charge/discharge capacity at 5C |
|---|---|---|---|---|---|
| Example 1 | Na₃V₂(P_{17/18}S_{1/18}O₄)₃ | 9.1 | 95.69% | 79.89 | 86.02% |
| Example 2 | Na₃V₂(P_{5/6}S_{1/6}O₄)₃ | 9.3 | 95.57% | 82.89 | 85.80% |
| Example 3 | Na₃V₂(P_{2/3}S_{1/3}O₄)₃ | 13.0 | 94.70% | 81.72 | 85.45% |
| Example 4 | Na₃V₂(P_{0.98}S_{0.02}O₄)₃ | 8.9 | 94.98% | 76.54 | 84.12% |
| Example 5 | Na₃V₂(P_{17/18}Se_{1/18}O₄)₃ | 9.2 | 95.70% | 80.65 | 85.51% |
| Example 6 | Na₃V_{1.5}Mn_{0.5}(P_{17/18}S_{1/18}O₄)₃ | 8.9 | 94.06% | 77.23 | 84.18% |
| Example 7 | Na₃V_{1.8}Mn_{0.2}(P_{17/18}S_{1/18}O₄)₃ | 9.0 | 94.63% | 78.56 | 85.07% |
| Example 8 | Na₃V_{1.5}Fe_{0.5}(P_{17/18}S_{1/18}O₄)₃ | 13.6 | 95.10% | 78.55 | 85.01% |
| Example 9 | Na₃V_{1.5}Ti_{0.5}(P_{17/18}S_{1/18}O₄)₃ | 12.9 | 96.10% | 81.45 | 87.41% |
| Example 10 | Na₃V_{1.5}Cro_{0.5}(P_{17/18}S_{1/18}O₄)₃ | 12.5 | 95.56% | 78.22 | 83.25% |
| Example 11 | Na₃V_{1.5}Mn_{0.5}(P_{17/18}Se_{1/18}O₄)₃ | 8.9 | 95.03% | 80.12 | 85.58% |
| Example 12 | Na₂K₁V_{1.5}Mn_{0.5}(P_{17/18}S_{1/18}O₄)₃ | 9.0 | 95.90% | 81.11 | 90.58% |
| Example 13 | Li₃V₂(P_{17/18}S_{1/18}O₄)₃ | 9.0 | 95.12% | 78.25 | 85.45% |
| Comparative Example 1 | Na₃V₂(PO₄)₃ | 8.5 | 93.49% | 74.12 | 81.05% |
| Comparative Example 2 | Na₃V_{1.5}Fe_{0.5}(PO₄)₃ | 11.5 | 92.12% | 70.12 | 79.47% |

From the curve of specific capacity of batteries as a function of the number of cycles in FIG. 2, it can be seen that the specific capacity of the battery in Comparative Example 1 was significantly worse than that of Examples 1 to 4 when the charge-discharge cycle test was performed for the batteries by using different current densities, especially high current densities. In addition, as the current density gradually increases, the battery prepared from an undoped NVP material experienced serious capacity fading.

It can be seen from the data in Table 1 that the doping of the element M at the phosphorus site can significantly improve the electronic conductivity, cycle performance, and rate performance of the NVP material, but doping with different M elements has slightly different effects on the electrochemical performance of the materials. The electrochemical performance of double-doped materials with doping at both the phosphorus site and the vanadium site had been improved to different degrees compared with an undoped NVP material. It can be seen through a further comparison of the data of Example 8 and the data of Comparative Example 2 that the electrochemical properties of the double-doped material Na₃V_{1.5}Fe_{0.5}(P_{17/18}S_{1/18}O₄)₃ were all significantly better than those of the singly-doped Na₃V_{1.5}Fe_{0.5}(PO₄)₃ with doping of Fe element only.

While exemplary embodiments of the present disclosure have been described above, the present disclosure is not limited thereto. It should be appreciated that some improvements and modifications can be made by those skilled in the art without departing from the technical principles of the present disclosure, which are also contemplated to be within the scope of the present disclosure.

## Claims

1. A battery material, a general molecular formula of the battery material comprising A₃V₂₋ₓEₓ(P_{1-y}M_{y}O₄)₃, wherein the element A represents an alkali metal element; the element E represents a doping element that substitutes V, and the element E comprises at least one of a transition metal element, a rare earth element, Mg, and Sr; the element M represents a doping element that substitutes P, and the element M comprises at least one of S and Se; and 0 ≤ x ≤ 1, and 0 < y ≤ 1/3.

2. The battery material according to claim 1, wherein the transition metal element comprises at least one of Fe, Cr, Mn, Co, Ti, Ni, Cu, Zn, Mo, Nb, and Zr; and the rare earth element comprises at least one of La and Ce.

3. The battery material according to claim 1 or 2, wherein a value range of x is: 0.1 ≤ x ≤ 1.

4. The battery material according to any one of claims 1 to 3, wherein a value range of y is: 1/18 ≤ y ≤ 1/3.

5. The battery material according to any one of claims 1 to 4, wherein the element A comprises at least one of Na, K, and Li.

6. A preparation method for a battery material, comprising:
weighing an A source, a vanadium source, an E source, a phosphorus source, and an M source according to a general molecular formula A₃V₂₋ₓEₓ(P_{1-y}M_{y}O₄)₃ of a battery material to be prepared, and mixing the sources to obtain a precursor material, wherein the element A represents an alkali metal element; the element E represents a doping element that substitutes V, and the element E comprises at least one of a transition metal element, a rare earth element, Mg, and Sr; the element M represents a doping element that substitutes P, and the element M comprises at least one of S and Se; and 0 ≤ x ≤ 1, and 0 < y ≤ 1/3; and
calcining the precursor material to obtain the battery material.

7. The preparation method according to claim 6, wherein conditions of the calcining comprise: calcining the precursor material under an inert gas atmosphere at 400°C to 900°C for 10 h to 30 h.

8. The preparation method according to claim 7, wherein the inert gas is at least one of argon, nitrogen, or helium.

9. The preparation method according to any one of claims 6 to 8, wherein, the mixing comprises a solid phase mixing method or a sol-gel method.

10. The preparation method according to any one of claims 6 to 9, wherein, the transition metal element comprises at least one of Fe, Cr, Mn, Co, Ti, Ni, Cu, Zn, Mo, Nb, and Zr; and the rare earth element comprises at least one of La and Ce.

11. The preparation method according to any one of claims 6 to 10, wherein, the element A comprises at least one of Na, K, and Li.

12. The preparation method according to any one of claims 6 to 11, wherein, a value range of x is: 0.1 ≤ x ≤ 1.

13. The preparation method according to any one of claims 6 to 12, wherein, a value range of y is: 1/18 ≤ y ≤ 1/3.

14. A secondary battery, comprising the battery material according to any one of claims 1 to 5.
